# EUROPEAN PATENT APPLICATION

(11) **EP 1 847 166 A2**
(43) Date of publication of application: **24.10.2007**
(21) Application number: 07101635.6
(22) Date of filing: 02.02.2007
(51) Int. Cl.: A01B 76/00

(54) **Electric installation applied to an agricultural tractor to be used in coupled tools**

(30) Priority: 20.04.2006 AR P060101565
(71) Applicant: Moszoro, Antonio Romano, 2000 Provincia de Santa Fe (AR); Moszoro, Bartolomé Estanislao, 2000 Provincia de Santa Fe (AR)
(72) Inventor: Moszoro, Antonio Romano, 2000 Provincia de Santa Fe (AR); Moszoro, Bartolomé Estanislao, 2000 provincia de Santa Fe (AR)
(74) Representative: Robba, Pierpaolo

(57) **Abstract**

Electric installation specially created for being built into an agricultural tractor for the purpose of providing an electric power source that may be used by any tool associated thereto to perform a specific task. The invented circuit extends from an alternator that takes energy from the tractor and feeds an external electric circuit including at least one output plug or connector. The alternator may take energy from the tractor's engine through a drive pulley, or from the tractor's power take-up. The invention envisages the use of two alternators, one for the tractor installation and another for the external output circuit, both with built-in voltage regulator, wherein the external output circuit includes electronic converters (capable of generating different output voltages) placed before the external contactors and plugs.

## Description

The main object of the present application is an ELECTRICAL INSTALLATION APPLIED TO AN AGRICULTURAL TRACTOR TO BE USED IN COUPLED TOOLS, specially created to be incorporated to an agricultural tractor in order to provide a source of electric power that may be used by any tool associated to it to perform a specific task, that is to say, a small mobile powerhouse.

Specifically, the present patent application covers an electric installation consisting of an alternator operated from the vehicle motor and associated to an electric circuit for the distribution of the energy generated, wherein external outlets and plugs for powering the tools or implements that may be coupled o associated thereto are included.

### PRIOR ART

It is a well-known fact that every tractor available in the market, in addition to its typical features and operating conditions such as the power of its engine, its transmission system and its electrical installation, has other characteristics related to the different tasks it may be intended to perform.

Therefore there are road tractors designed for civil works such as the construction of bridges and roads; tractors essentially required for the transportation of cistern trailers for water services, waste disposal collection services, etc.

Also known are the so called agricultural tractors which, in addition to their use as a towing vehicle for several functions and purposes, are used in farms to operate several kinds of pull-type implements and tools for seeding, soil management, harvesting, fumigating, etc.

Therefore, the most desired tractors are those that, besides their robust and high power drive, provide installations for the supply of hydraulic and/or pneumatic fluid, generally associated to the power take-off, with the inclusion of the corresponding control and operation valve components, designed to be used in any of the aforesaid coupled agricultural tools. Usually they are used for operating the hydraulic lifting systems required for placing implements in a transport or work position, or for actuating seeding resources, etc.

However, no civil or agricultural tractors equipped with an electric power supply source that can be used by the tool coupled or pulled by them, are known.

It has been confirmed that there is already available in the market a significant number of different agricultural machines including modern control, command and operation resources, that require electric and electronic installations for their operation. In most cases they are self-propelled machines provided at source with the electricity-generating means and the energy feeding and distribution installations that supply such means.

However, in the case of tow machines coupled to a tractor vehicle, it is not possible to resort to the use of several control and command means that could be a benefit but which are not installed because they need electric power.

### NOVELTY OF THE INVENTION - MAIN OBJECT

The electric installation referred to in the present patent application has been specially created for being applied to a tractor in order to provide an electric supply service that can be used by the coupled implement, machine or tool.

The object is to provide the tractor with an electrical output that adds a new feature to it as an auxiliary machine capable of performing new tasks.

The invention considers a first embodiment that comprises using an alternator, associated to the tractor's engine, with a power that is higher than the regular value, from which two independent electric circuits stretch out, one feeding the tractor's own electric installation and another one specially designed to provide external feed.

Another embodiment covered by the scope of this invention comprises the use of a second alternator, also linked to the tractor's engine, specially used for supplying energy to an external electric circuit.

Another embodiment to be considered within the scope covered by present patent application comprises connecting a coupling system to the tractor power take-off that puts into operation an alternator specially designed to generate electricity for an electric circuit external to it.

Obviously, the aforesaid electric circuits -created for the above mentioned purpose- may include several alternating current or direct current outlets with plugs, with their current and voltage variants, to the effect of which electronic converters and converters embracing all possible variants for obtaining the normalized output voltages required, will be used.

### BRIEF DESCRIPTION OF THE REPRESENTATIVE FIGURES

In order to embody the advantages briefly described herein, to which many others may be added by users and experts in the art, and to facilitate the understanding of the constructive, constitutive and functional features of the applied electrical installation of this invention, an example of a preferred embodiment illustrated on a schematic basis and not to a predetermined scale, is described on the attached figures, expressly making clear that, as mere examples, the allocation of a limitative or exclusive character regarding the scope of protection, is not applicable. All figures are explanatory and illustrative of the basic conception on which the invention is based.
Figure 1 represents a first version of the power outlet according to the present invention.
Figure 2 represents a possible variant of the power outlet according to the present invention.
Figure 3 represents another possible variant of the power outlet according to the present invention.
Figure 4 represents another possible variant of the power outlet according to the present invention.
Figure 5 is a possible variant with respect to previous figure.

It is clarified that, in all figures, equal reference numbers and characters correspond to equal or similar parts or elements in the assembly, according to the example chosen to explain the electric installation applied to the present invention.

### DETAILED DESCRIPTION OF A PREFERRED EXAMPLE

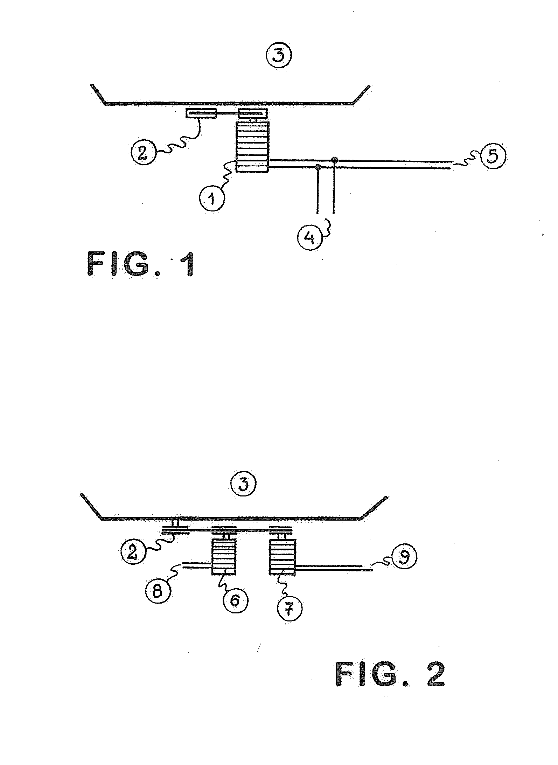

Figure 1 represents the case wherein from the alternator 1 of the tractor, which uses the movement of motor 3 through a drive pulley 2 for generating electric power, it is possible to install two independent electric circuits 4 and 5 that stretch out to feed the tractor's own installation and also to provide an external electric circuit specially designed to be used with the tool or implement coupled thereto.

Figure 2 shows the case wherein from the tractor's engine 3, through drive pulley 2, two alternators 6 and 7 may be coupled, such that each one of them feeds electric circuits 8 allocated to feed the coupled tool or implement and the other feeds circuit 9 allocated to the installation of the tractor itself.

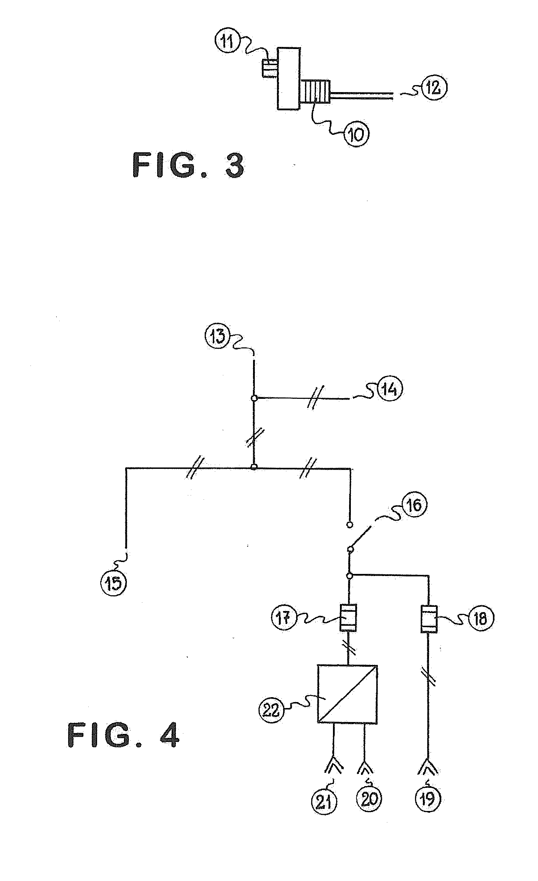

Figure 3 shows the case wherein an alternator 10 is associated to a power outlet 11 of the tractor, through a sandwiched motor reducer, establishing a new circuit 12 wherefrom any tool coupled thereto may be fed.

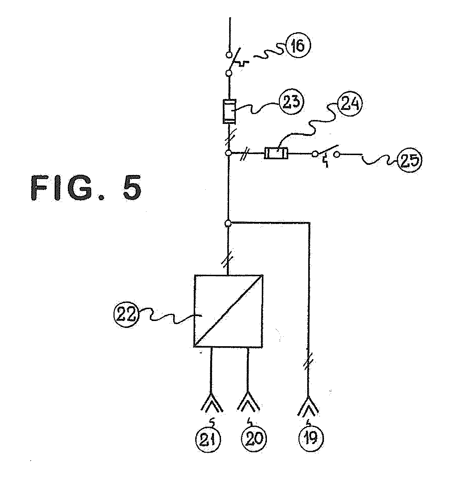

Precisely, Figure 4 shows the possibility whereby, from an alternator 13 which may be any of those exemplified above, a storage battery 14 can be fed and an electric circuit 15 can be established, feeding the tractor's own installation, as well as a new external feed circuit that stretches out from a sectionalizing thermal switch 16 with the corresponding fuses 17, 18, and defines the presence of several output outlets 19, 20 and 21, wherefrom direct or alternate current is delivered, for the purpose of which the necessary converters 22 shall be included.

Finally, Figure 5 represents a constructive option wherein the electric circuit used to feed the coupled machine or tool includes a sectionalizing thermal switch 16 that includes a first fuse 23 sandwiched in the conductor that stretches up to the converter 22; a second fuse 24 sandwiched in the conductor that feeds the power storage battery 25 and the aforesaid external outlets or plugs 19, 20 and 21.

## Claims

1. ELECTRIC INSTALLATION APPLIED TO AN AGRICULTURAL TRACTOR TO BE USED IN COUPLED TOOLS, specially created to be incorporated into an agricultural tractor in order to provide an electric power source that may be used by any tool associated to the tractor to perform a specific task **characterized in that** it extends from an alternator that collects energy from the tractor and feeds an external electric circuit including at least one connector or outlet.

2. An ELECTRIC INSTALLATION APPLIED TO AN AGRICULTURAL TRACTOR, according to claim 1, wherein the alternator collects energy from the tractor' s engine through a drive pulley.

3. An ELECTRIC INSTALLATION APPLIED TO AN AGRICULTURAL TRACTOR, according to claim 1, wherein the alternator collects energy from the tractor's power outlet, through an inserted motor reducer.

4. An ELECTRIC INSTALLATION APPLIED TO AN AGRICULTURAL TRACTOR, according to claim 1, wherein the alternator belongs to the type including a built-in voltage regulator.

5. An ELECTRIC INSTALLATION APPLIED TO AN AGRICULTURAL TRACTOR, according to claim 1, wherein said electric installation comprises two alternators, one for the tractor installation and another one for the external output circuit, both of them with a built-in voltage regulator.

6. An ELECTRIC INSTALLATION APPLIED TO AN AGRICULTURAL TRACTOR, according to claim 1, wherein the external output circuit includes electronic converters (capable of generating different output voltages) placed before the external plugs and contactors.
